Europäisches Patentamt

European Patent Office

Office européen des brevets

(19)

(11) Veröffentlichungsnummer: **0 077 970**
.B1

(12)  **EUROPÄISCHE PATENTSCHRIFT**

(45) Veröffentlichungstag der Patentschrift:
10.04.85

(21) Anmeldenummer: **82109396.0**

(22) Anmeldetag: **11.10.82**

(51) Int. Cl.⁴: **B 23 K 26/08**, B 23 K 26/02

(54) Vorrichtung zum automatischen Abgleich der Kennlinie einer Ablenkeinheit.

(30) Priorität: **23.10.81 DE 3142152**

(43) Veröffentlichungstag der Anmeldung:
**04.05.83 Patentblatt 83/18**

(45) Bekanntmachung des Hinweises auf die Patenterteilung:
**10.04.85 Patentblatt 85/15**

(84) Benannte Vertragsstaaten:
**AT BE CH DE FR GB IT LI NL SE**

(56) Entgegenhaltungen:
**FR - A - 2 236 666**
**FR - A - 2 373 819**
**US - A - 3 814 895**
**US - A - 4 125 755**
**US - A - 4 218 606**

(73) Patentinhaber: **Siemens Aktiengesellschaft, Berlin und München Wittelsbacherplatz 2, D-8000 München 2 (DE)**

(72) Erfinder: **Koszytorz, Günther, Am Schwadergraben 13, D-8122 Penzberg (DE)**
Erfinder: **Lucke, Herbert, Dipl.-Ing., Dreibergstrasse 12, D-8520 Erlangen (DE)**
Erfinder: **Schlosser, Gerhard, Dipl.-Ing., Wiesenstrasse 4, D-8521 Weiher (DE)**
Erfinder: **Väth, Joachim, Dipl.-Ing., Gerhard-Hauptmannstrasse 17, D-8520 Erlangen (DE)**

ACTORUM AG

## Beschreibung

Die Erfindung betrifft eine Vorrichtung zum automatischen Abgleich der Kennlinie einer Ablenkeinheit nach Nullpunkt und Steigung.

Ablenkeinheiten werden beispielsweise zur Einstellung von Ablenkspiegeln für einen Laserstrahl bei Laserschreibgeräten benötigt. Dabei wird ein mit einem Istwertmesskreis erfasstes Lagesignal mit einem Sollwert verglichen und mit Hilfe eines Reglers, der die Ablenkeinheit steuert, das Lagesignal in Übereinstimmung mit einem Sollwert gebracht. Es hat sich jedoch gezeigt, dass die üblicherweise eingesetzten, mit einem kapazitiven Fühler arbeitenden Istwertmesskreise eine Temperaturdrift aufweisen, die dazu führt, dass die Istlage des Ablenkspiegels vom eingestellten Sollwert abweicht. Dies führt zu Verschiebungen und Massstabsveränderungen des Schriftfeldes. Die Temperaturdrift führt nicht nur zu einer Verschiebung des Nullpunkts der Kennlinie der Ablenkeinheit, sondern auch zu einer Veränderung der Kennliniensteigung.

Bei handelsüblichen Geräten wird die Temperaturdrift dadurch kompensiert, dass die Ablenkeinheiten vorgeheizt werden oder eine manuelle Kompensation durchgeführt wird. Dazu sind im Regler Potentiometer zur Kennlinienverstellung vorgesehen. Mit der Vorheizung der Ablenkeinheit ist jedoch keine vollständige Kompensation möglich. Bei der manuellen Kompensation kann eine Korrektur des Temperaturfehlers i. a. nur für eine bestimmte Betriebstemperatur durchgeführt werden.

Aus FR-A Nr. 2373819 ist bereits eine Vorrichtung zum automatischen Eichen des Positionsgebers eines Magnetkopfes, der über einer sich drehenden Magnetspeicherplatte bewegt wird, bekannt.

Aufgabe der Erfindung ist es daher, eine Vorrichtung zum Abgleich der linearen Kennlinie einer Ablenkeinheit so auszugestalten, dass ein automatischer Abgleich erfolgt.

Diese Aufgabe wird erfindungsgemäss durch die Merkmale des Patentanspruchs 1 gelöst.

Mit der erfindungsgemässen Lösung ist ein automatischer Abgleich sowohl des Nullpunkts als auch der Steigung der Kennlinie der Ablenkeinheit möglich. Der Abgleich erfolgt in kurzer Zeit, so dass er auch periodisch durchgeführt werden kann. Damit ist ein automatischer Abgleich in jedem Betriebszustand möglich.

Vorteilhafterweise werden der erste und der zweite Speicher vor Beginn des Abgleichs mit Werten geladen, die kleiner als die nach erfolgtem Abgleich zu erwartenden Werte sind, wobei lediglich ein Inkrementieren der Inhalte des ersten und zweiten Speichers erfolgt. Da die Speicherinhalte nur in einer Richtung verändert werden, muss von der Vergleicherstufe nur eine Bedingung überprüft werden, nämlich ob das Lagemesssignal noch kleiner als der vorgegebene Wert ist.

Zweckmässigerweise sind die Abgleichsollwerte in einem dritten Speicher abgespeichert, an dessen Adresseingängen der Nullabgleichbefehl und der Steigungsabgleichbefehl ansteht und dessen Ausgänge mit dem ersten Eingang des Multiplizierers und mit dem zweiten Eingang des Vergleichers verbunden sind. Damit können feste Abgleichwerte vorprogrammiert werden.

Zwischen dem dritten Speicher und dem ersten Eingang des Multiplizierers ist zweckmässigerweise ein Umschalter eingefügt, an dessen erstem Eingang der Sollwert für die Ablenkeinheit ansteht, dessen zweiter Eingang mit dem Ausgang des dritten Speichers verbunden ist und der bei einem Steigungsabgleichbefehl oder Nullabgleichbefehl vom ersten auf den zweiten Eingang umschaltet. Damit wechselt der der Ablenkeinheit vorgegebene Sollwert beim Abgleichvorgang selbsttätig auf den vorgegebenen Abgleichsollwert.

Der erste und der zweite Speicher können besonders einfach als erster und zweiter Zähler realisiert sein, wobei ein Taktgeber vorgesehen ist, der die Inkrementier- und Dekrementiereingänge des ersten und des zweiten Zählers mit Zählimpulsen beaufschlagt.

Der Taktgeber kann mit den jeweils ersten Eingängen von vier UND-Gattern verbunden sein, wobei jeweils am zweiten Eingang des ersten und zweiten UND-Gatters der Nullabgleichbefehl und jeweils am zweiten Eingang des dritten und vierten UND-Gatters der Steigungsabgleichbefehl ansteht, wobei der erste Ausgang der Vergleicherstufe jeweils mit dem dritten Eingang des zweiten und vierten UND-Gatters und der zweite Ausgang der Vergleicherstufe jeweils mit dem dritten Eingang des ersten und dritten UND-Gatters verbunden ist und wobei der Ausgang des ersten UND-Gatters mit dem Inkrementiereingang des zweiten Zählers, der Ausgang des zweiten UND-Gatters mit dem Dekrementiereingang des zweiten Zählers, der Ausgang des dritten UND-Gatters mit dem Inkrementiereingang des ersten Zählers und der Ausgang des vierten UND-Gatters mit dem Dekrementiereingang des ersten Zählers verbunden ist. Mit dieser Schaltungsanordnung wird eine für die Abgleichfunktion erforderliche Beaufschlagung der Zähler mit Inkrementier- bzw. Drekrementierimpulsen erreicht.

Alternativ können der erste bis dritte Speicher auch Pufferspeicher sein, die vom Datenbus eines Mikroprozessors oder Rechners entsprechend geladen werden. Damit kann die Abgleichvorrichtung im Zusammenwirken mit einem Mikroprozessor oder Rechner besonders einfach angesteuert werden.

Die Lagemesseinrichtung kann eine mit einer Welle der Ablenkeinheit verbundene Scheibe enthalten, die im Lichtweg zwischen einem Lichtsender und einem das Lagemesssignal abgebenden Lichtempfänger liegt, wobei die Scheibe eine erste Schlitzblende aufweist, die bei Nullage der Ablenkeinheit im Lichtweg liegt und wobei die Scheibe eine zweite Schlitzblende aufweist, die im Lichtweg liegt, wenn die Lage der Ablenkeinheit mit dem zweiten Abgleichsollwert übereinstimmt. Mit einer derartigen Lagemesseinrichtung können die Abgleichpunkte bei geringem konstruktiven Aufwand genau erfasst werden. Diese Lagemesseinrichtung hat ausserdem den Vorteil, dass ihr Ausgangssignal in beiden Abgleichpunkten gleich ist, so dass die Vergleicherstufe in beiden Abgleichpunkten mit dem selben Vergleichswert arbeiten kann und eine Umschaltung nicht erforderlich ist.

Vorteilhafterweise kann dabei der Lichtempfänger eine Differentialfotodiode sein. Das Ausgangssignal dieser Differentialfotodiode ist in beiden Abgleichpunkten Null, so dass zum Abgleich lediglich ein Vergleich mit dem 0-Signal erforderlich ist. Die Vergleicherstufe vereinfacht sich damit auf einen Grenzwertgeber.

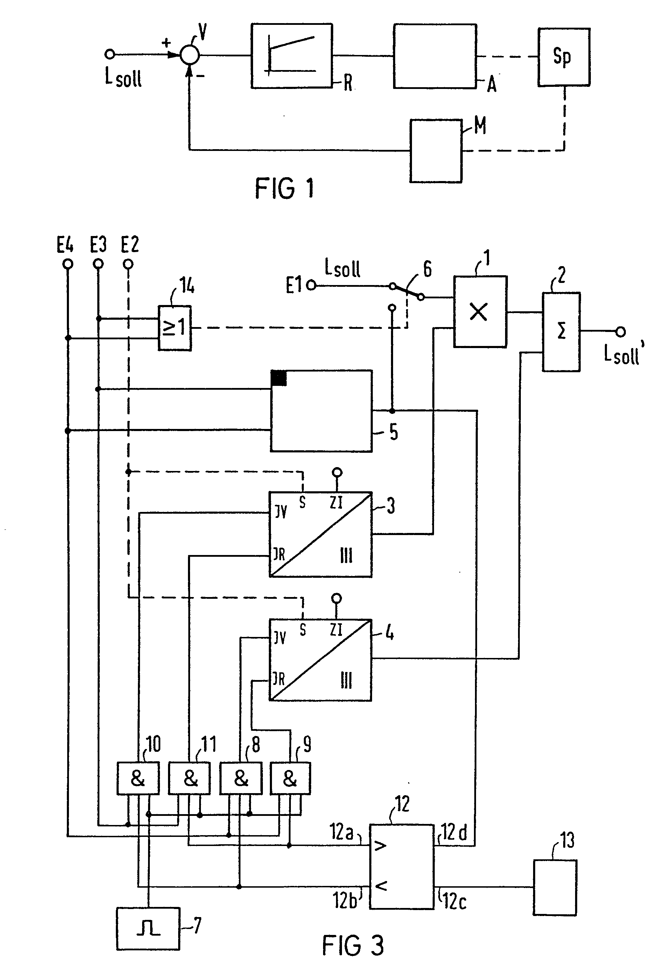

Ausführungsbeispiele der Erfindung werden nachfolgend anhand der Fig. 1 bis 5 näher erläutert.

Fig. 1 zeigt eine bekannte Steuereinrichtung für eine Ablenkeinheit A, wie sie z. B. in Laserschreibgeräten üblicherweise verwendet wird. Die Ablenkeinheit A verstellt einen Spiegel Sp, dessen Istlage mit einem Istwertmesskreis M erfasst wird. Dieser arbeitet z. B. mit einem kapazitiven Lagegeber. Der Messwert für die Istlage wird in einem Vergleicher V mit einem Lagesollwert $L_{soll}$ verglichen. Die Regeldifferenz wird einem Regler R aufgeschaltet, der die Ablenkeinheit A ansteuert.

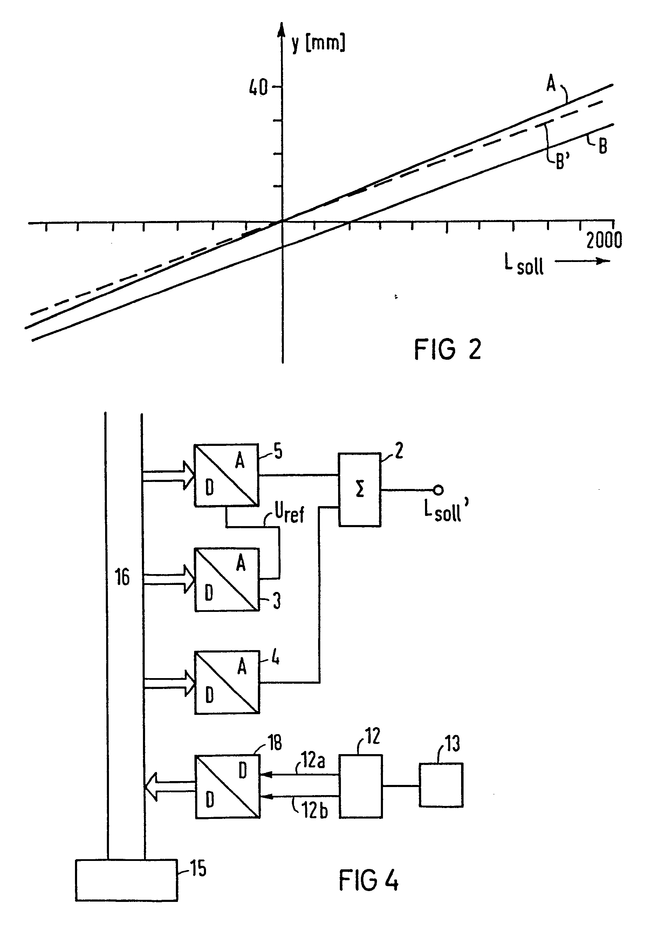

Die Ablenkeinheit weist im Idealfall z. B. eine in Fig. 2 dargestellte Kennlinie A auf, bei der einer Stufe des Sollwerts eine Schreibstrahlablenkung y von 0,02 mm entspricht. Mit $\pm$ 2000 Stufen des Sollwerts wird somit eine Strahlauslenkung von insgesamt $\pm$ 40 mm erzielt.

Wie bereits eingangs dargelegt, weist der Istwertmesskreis M eine Temperaturdrift auf, so dass der Messwert für die Istlage nicht mehr mit der tatsächlichen Lage übereinstimmt. Dies wirkt sich sowohl in einer Parallelverschiebung als auch in einer Veränderung der Steigung der Kennlinie A aus, die damit in die ebenfalls in Fig. 2 dargestellte Kennlinie B übergeht. Bei einem Sollwertsignal von + 2000 bzw. − 2000 würde sich damit beispielsweise eine Strahlauslenkung von ca. + 32 bzw. − 42 mm ergeben. Um die Abweichung der Kennlinie B von der Idealkennlinie A zu kompensieren, muss der Lagesollwert $L_{soll}$ entsprechend verändert werden. Damit kann die Kennlinie der Ablenkeinheit auf ihre Sollkennlinie abgeglichen werden. Ein derartiger Abgleich ist möglich, wenn man die Kennlinie B zunächst so verschiebt, dass sie als Kennlinie B' durch den Nullpunkt des Koordinatensystems verläuft. Dies kann dadurch realisiert werden, dass man zum Sollwert $L_{soll}$ einen bestimmten Betrag addiert. Anschliessend muss die Kennlinie B' noch gedreht werden, was durch Multiplikation des Sollwerts mit einem konstanten Faktor erfolgen kann. Der beschriebene Abgleich erfolgt zweckmässigerweise mit zwei Abgleichpunkten, nämlich dem Abgleichpunkt 0 zus Parallelverschiebung der Kennlinie und einem zweiten, von Null verschiedenen Abgleichpunkt, zur Drehung der Kennlinie.

Eine Schaltungsanordnung, mit der ein Abgleich der Kennlinie einer Ablenkeinheit automatisch durchgeführt werden kann, ist in Fig. 3 dargestellt. Der am Eingang E1 anstehende Lagesollwert $L_{soll}$ ist über einen Umschalter 6 dem ersten Eingang eines Multiplizierers 1 zugeführt. Der zweite Eingang des Multiplizierers 1 ist mit dem Ausgang eines Speichers 3 verbunden. Damit wird die beschriebene Drehung der Kennlinie bewirkt. Der Ausgang des Multiplizierers 1 ist mit einem ersten Eingang eines Addierers 2 verbunden, dessen zweiter Eingang mit einem zweiten Speicher 4 verbunden ist. Mit dem Addierer 2 wird die beschriebene Parallelverschiebung der Kennlinie realisiert, so dass am Ausgang des Addierers der korrigierte Sollwert $L_{soll}'$ ansteht.

Durch die im folgenden beschriebene Schaltung wird erreicht, dass die Speicher 3 und 4 mit den für den Abgleich erforderlichen Werten geladen werden. Wie beschrieben, ist dafür ein zweifacher Abgleichvorgang, nämlich ein Null- und Steigungsabgleich, erforderlich. An einem Eingang E4 steht der Nullabgleichbefehl an, der einem Adresseingang eines dritten Speichers 5, dem jeweils zweiten Eingang zweier UND-Gatter 8 und 9 sowie einem Eingang eines ODER-Gatters 14 zugeführt ist. Das Ausgangssignal des ODER-Gatters 14 steuert den Umschalter 6 an, der damit den ersten Eingang des Multiplizierers 1 vom Eingang E1 auf den Ausgang des Speichers 5 umschaltet. Im Speicher 5 wurde mit dem Nullabgleichbefehl der entsprechende Abgleichsollwert angewählt, in diesem Fall also der Wert Null. Der Speicher 4 muss also nun so eingestellt werden, dass der Schreibstrahl tatsächlich die Nullage einnimmt. Dazu ist eine gesonderte Lagemesseinrichtung 13 vorgesehen, die keinen Temperaturfehler aufweisen darf. Da diese Lagemesseinrichtung 13 jedoch die Lage des Lichtstrahls nur in zwei Punkten, nämlich im Nullpunkt und einem weiteren Abgleichpunkt abtasten muss, ist dies, wie nachfolgend noch beschrieben wird, einfach zu realisieren. Das Ausgangssignal der Lagemesseinrichtung 13 wird einem Vergleicher 12 zugeführt, dessen Vergleichereingang mit dem Ausgang des Speichers 5 verbunden ist. Da bei Nullabgleichbefehl am Ausgang des Speichers 5 ein 0-Signal ansteht, wird also das Lagemesssignal der Lagemesseinrichtung 13 mit Null verglichen. Der Vergleicher 12 weist zwei Ausgänge 12a und 12b auf, wobei am Ausgang 12a ein 1-Signal ansteht, wenn das Lagemesssignal grösser als der Vergleichswert ist, und wobei am Ausgang 12b ein 1-Signal ansteht, wenn das Lagemesssignal kleiner als das Vergleichssignal ist. Der Ausgang 12a des Vergleichers 12 ist mit dem dritten Eingang des UND-Gatters 9 und der Ausgang 12b mit dem dritten Eingang des UND-Gatters 8 verbunden. Mit den ersten Eingängen der beiden UND-Gatter 8 und 9 ist jeweils der Ausgang eines Taktgebers 7 verbunden. Der Ausgang des UND-Gatters 8 ist mit dem Inkrementiereingang IV des Zählers 4 und der Ausgang des UND-Gatters 9 mit dem Dekrementiereingang IR des Zählers 4 verbunden.

Damit werden also bei Nullabgleichbefehl die Taktimpulse des Taktgebers 7 auf den Inkrementiereingang des Zählers 4 durchgeschaltet, wenn das Lagemesssignal kleiner als Null ist bzw. auf den Dekrementiereingang durchgeschaltet, wenn das Lagemesssignal grösser als Null ist. Der Zähler 4 wird also auf einen derartigen Wert gebracht, dass bei Vorgabe eines Sollwerts Null der Schreibstrahl tatsächlich die Nullage einnimmt. Dies geschieht, wie erläutert, durch Addition des Zählerstands des Zählers 4 zum Sollwert im Addierer 2. Damit ist eine Parallelverschiebung der abzugleichenden Kennlinie durchgeführt. Der Nullabgleich ist damit beendet.

Mit dem nun folgenden, am Eingang E3 anstehenden Steigungsabgleichbefehl wird anschliessend eine Drehung der abzugleichenden Kennlinie durchgeführt. Dazu ist der Eingang E3 ebenfalls mit einem Eingang des ODER-Gatters 14, mit einem weiteren Adresseingang des Speichers 5 sowie mit jeweils dem zweiten Eingang zweier UND-Gatter 10 und 11 verbunden. Im Speicher 5 wird mit dem Steigungsabgleichbefehl ein von Null verschiedener Abgleichsollwert adressiert. Da beim Steigungsabgleichbefehl über das ODER-Gatter 14 ebenfalls eine Umschaltung des Umschalters 6 auf den Ausgang des Speichers 5 vorgenommen wird, wird dieser Abgleichsollwert anstelle des Sollwerts $L_{soll}$ der Ablenkeinheit vorgegeben. Ferner wird der Abgleichsollwert auch dem Vergleichseingang des Vergleichers 12 zugeführt. Dabei wird davon ausgegangen, dass die Lagemesseinrichtung 13 bei Einstellung des Schreibstrahls auf den zweiten Abgleichpunkt als Ausgangsgrösse den zweiten Abgleichsollwert liefert. Die Lagemesseinrichtung 13 kann aber auch, wie z. B. im nachfolgenden Ausführungsbeispiel dargestellt, im zweiten Abgleichpunkt den Ausgangswert 0 liefern. In diesem Fall wird als Vergleichswert selbstverständlich der Wert Null vorgegeben. Die Lagemesseinrichtung 13 kann aber im zweiten Abgleichpunkt auch jedes beliebige Lagemesssignal liefern, wenn dieses im Speicher abgespeichert ist und gegebenenfalls über einen zweiten Ausgang 5 dem Vergleichseingang des Vergleichers 12 zugeführt ist.

Der Vergleicher 12 überprüft nun auch im zweiten Abgleichpunkt, ob das abgegebene Lagemesssignal grösser oder kleiner als der Vergleichswert ist. Zur entsprechenden Einstellung des Zählers 3 ist der Ausgang 12b mit dem dritten Eingang eines UND-Gatters 10 und der Ausgang 12a mit dem dritten Eingang eines UND-Gatters 11 verbunden. Der Ausgang des UND-Gatters 10 ist mit dem Inkrementiereingang IV des Zählers 3 und der Ausgang des UND-Gatters 11 mit dem Dekrementiereingang des Zählers 3 verbunden. Mit den ersten Eingängen der UND-Gatter 8 und 9 ist ebenfalls der Ausgang des Taktgebers 7 verbunden.

Mit den Taktimpulsen des Taktgebers 7 wird also der Zähler 3 bei Vorliegen des Steigungsabgleichbefehls so lange verstellt, bis die Lage des Schreibstrahls mit dem vorgegebenen zweiten Abgleichsollwert übereinstimmt. Dies geschieht wie erläutert, indem das Ausgangssignal des Zählers 3 dem zweiten Eingang des Multiplizierers 1 zugeführt ist. Durch diese Multiplikation wird eine Drehung der Kennlinie B' durchgeführt, bis diese mit der Kennlinie A übereinstimmt.

Damit ist auch der Steigungsabgleich beendet.

Der Umschalter 6 wird wieder zurückgeschaltet, so dass der Ablenkeinheit wieder der Lagesollwert $L_{soll}$ vorgegeben wird. Die Zählerstände der Zähler 3 und 4 bleiben dabei bis zum nächsten Abgleichvorgang erhalten, so dass nunmehr zumindest für einen bestimmten Betriebsbereich eine Übereinstimmung der Kennlinie der Ablenkeinheit mit ihrer Sollkennlinie vorliegt. Der Abgleichvorgang kann z. B. in festen Zeitabständen, z. B. nach einer bestimmten Anzahl von Beschriftungsvorgängen, oder auf Anforderung erfolgen.

Die Periodendauer der Taktimpulse ist so gewählt, dass zwischen zwei Taktimpulsen jeweils ein eventueller Einschwingvorgang der Ablenkeinheit abgeklungen ist.

Bei dem bisher beschriebenen Ausführungsbeispiel ist in der Vergleicherstufe 12 eine Überwachung erforderlich, ob das Lagemesssignal grösser oder kleiner als der Abgleichsollwert ist. Damit müssen also zwei Ausgangssignale der Vergleicherstufe 12 verarbeitet werden. Alternativ kann man jedoch auch die Zähler 3 und 4 vor Beginn des Abgleichs auf Werte setzen, die unter den nach erfolgtem Abgleich zu erwartenden Werten sind. Dies kann z. B. durch ein Setzsignal am Eingang E2 erfolgen, der durch die in Fig. 3 gestrichelt eingezeichneten Leitungen mit den Setzeingängen S der Zähler 3 und 4 verbunden ist. Die vorgegebenen Werte, auf die die Zähler 3 und 4 gesetzt werden sollen, stehen am Voreinstelleingang ZI des Zählers 3 bzw. 4 an. In diesem Fall wird nur das kleiner-Signal am Ausgang 12b der Vergleicherstufe 12 ausgewertet. Die Zählerstände der Zähler 3 bzw. 4 werden so lange inkrementiert, bis das Signal am Ausgang 12b verschwunden ist. Da ein Dekrementieren der Zähler 3 und 4 entfällt, können auch die UND-Gatter 9 und 11 entfallen.

Dieses Verfahren, bei dem die Abgleichwerte von einer Seite her angenähert werden, dauert etwas länger als die vorher beschriebene zweiseitige Annäherung, da mit der Voreinstellung der Zähler 3 und 4 deren Werte im Mittel weiter vom einzustellenden Endwert entfernt sind. Dafür ist nur ein Vergleichssignal auszuwerten und die Genauigkeit beim Anfahren des Abgleichpunkts ist etwas grösser. Ausserdem ist die Gefahr, dass der Ablenkspiegel Sp pendelt, geringer, wenn er nur in einer Richtung bewegt wird.

Fig. 4 zeigt schliesslich eine Möglichkeit, wie der automatische Abgleich mit Hilfe eines Mikroprozessors oder Rechners durchgeführt werden kann. Dabei sind die Speicher 3 bis 5 als Pufferspeicher ausgeführt, die von einem Mikroprozessor oder Rechner 15 über einen Datenbus 16 geladen werden. Die Pufferspeicher 3 bis 5 beinhalten zugleich einen Digital/Analog-Wandler, der die Digitalsignale des Mikroprozessors zur Weiterverarbeitung in Analogwerte umsetzt. Der Digital/Analog-Wandler des Pufferspeichers 5 ist als multiplizierender Wandler ausgeführt, dessen Multiplikationseingang mit dem Ausgang des Pufferspeichers 3 verbunden ist. Die Ausgänge 12a und 12b des Vergleichers 12 sind ebenfalls über einen Pufferspeicher 18 an den Datenbus 16 angekoppelt. Beim Ausführungsbeispiel nach Fig. 4 ist vorausgesetzt, dass das Lagemesssignal der Lagemesseinrichtung 13 bei jedem Abgleichsollwert auf Null geht. Der Vergleicher 12 vergleicht daher das Lagemesssignal stets mit Null, so dass keine gesonderte Vergleichsspannungsvorgabe nötig ist. Der Vergleicher 12 kann dabei als Fensterdiskriminator ausgeführt sein, der nur dann ein Signal an den Ausgängen 12a bzw. 12b abgibt, wenn das Eingangssignal ausserhalb einer bestimmten Bandbreite um den Nullpunkt liegt.

Der Mikroprozessor bzw. Rechner 15 setzt den Pufferspeicher 5 im Normalbetrieb auf den Lagesollwert für die Ablenkeinheit, so dass sich die Ablenkeinheit entsprechend einstellt. Beim Abgleichvorgang stellt der Mikroprozessor für den Pufferspeicher 5 zunächst beim Nullabgleich das Eingangssignal Null ein. Wenn das bereits beschriebene Verfahren der einseitigen Annäherung an den Abgleichszustand durchgeführt wird, so gibt der Mikroprozessor 15 ausserdem den Pufferspeichern 3 und 4 Werte vor, die unterhalb der zu erwartenden Werte im Abgleichszustand liegen. Anschliessend wird über den Pufferspeicher 18 der Ausgang 12b der Vergleicherstufe 12 abgefragt, ob das kleiner-Signal ansteht. Ist dies der Fall, dann wird der Inhalt des Pufferspeichers 4 um eins erhöht. Dann wird erneut der Ausgang 12b des Vergleichers 12 abgefragt, ob das kleiner-Signal noch ansteht. Der Inhalt des Pufferspeichers 4 wird so lange erhöht, bis das kleiner-Signal am Ausgang 12b des Vergleichers 12 verschwunden ist. Zwischen den Abfragevorgängen wartet man gegebenenfalls eine Einschwingzeit des Ablenkspiegels Sp ab. Damit ist also der Nullabgleich durchgeführt.

Anschliessend wird dem Pufferspeicher 5 ein von Null verschiedener zweiter Abgleichwert, der möglichst in der Nähe des Endausschlags des Spiegels Sp liegt oder mit diesem übereinstimmt, vorgegeben. Der Inhalt des Pufferspeichers 4 bleibt unverändert. Es wird wieder das kleiner-Signal am Ausgang 12b des Vergleichers 12 abgefragt und der Inhalt des Pufferspeichers 3 so lange inkrementiert, bis das kleiner-Signal verschwunden ist. Damit ist der Abgleich beendet und der Mikroprozessor 15 kann wieder im Normalbetrieb den Lagesollwert für die Ablenkeinheit A vorgeben.

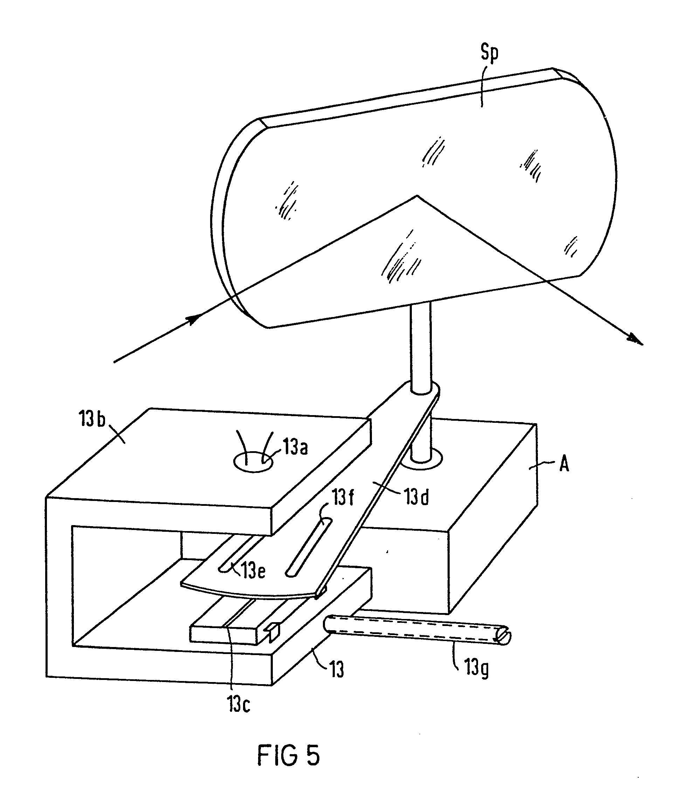

Fig. 5 zeigt schliesslich schematisch ein Ausführungsbeispiel für die Lagemesseinrichtung 13. Sie hat, wie bereits erläutert, die Aufgabe, die Lage der Ablenkeinheit A in zwei Abgleichpunkten, von denen einer der Nullpunkt ist, genau festzustellen. Sie darf dabei im Gegensatz zum Istwertmesskreis M keine Temperaturdrift haben. Die Lagemesseinrichtung 13 enthält einen Lichtsender 13a, der beispielsweise eine Leuchtdiode sein kann. Dem Lichtsender 13a liegt in einer Halterung 13b ein Lichtempfänger 13c gegenüber, der beispielsweise eine Differentialfotodiode sein kann. Diese enthält zwei Teilfotodioden, deren Ausgangsspannungen gegeneinander geschaltet sind. Wenn daher ein Lichtstrahl auf die Trennlinie zwischen beiden Teildioden fällt, so werden diese gleich stark beleuchtet, die Ausgangsspannungen beider Teilfotodioden sind gleich und die Ausgangsspannung der gesamten Differentialfotodiode ist Null. Weicht dagegen der Lichtstrahl von der Trennungslinie ab, so wird eine der beiden Teilfotodioden stärker beleuchtet und die Ausgangsspannung der gesamten Differentialfotodiode wird je nach Richtung der Ablenkung positiv oder negativ.

Im Lichtweg zwischen dem Lichtsender 13a und Lichtempfänger 13c liegt eine mit einer Welle der Ablenkeinheit A mechanisch fest verbundene Scheibe 13d. Die Scheibe 13d weist zwei Schlitzblenden 13e und 13f auf. Die Schlitzblenden 13e und 13f sind so angeordnet, dass jede eine Schlitzblende bei einem der beiden Abgleichpunkte genau zwischen Lichtsender 13a und der Trennungslinie zwischen den beiden Teilfotodioden der Differentialfotodiode 13c liegen. Damit wird also erreicht, dass das Ausgangssignal der Lagemesseinrichtung 13 Null wird, sobald die Ablenkeinheit A einen der beiden Abgleichpunkte erreicht hat.

Um die Lage eines dieser Abgleichpunkte, vorzugsweise des Nullpunkts, einstellen zu können, ist der Träger 13b von Lichtsender 13a und Lichtempfänger 13c zweckmässigerweise mit einer Stellschraube 13g verschiebbar angeordnet. Damit können Fertigungstoleranzen für den ersten Spalt 13e bzw. die Anbringung der Scheibe 13d an der Welle der Ablenkeinheit A ausgeglichen werden. Um auch eine Fertigungstoleranz bezüglich des Abstands zwischen beiden Schlitzblenden 13e und 13f auszugleichen, die den zweiten Abgleichpunkt betreffen würde, kann man nach folgenden Verfahren vorgehen: Der zweite Abgleichpunkt wird nicht von vornherein festgelegt, sondern es wird zunächst ermittelt, bei welchem Punkt die Lagemesseinrichtung die Spannung Null abgibt. Dieser Punkt würde dann als zweiter Abgleichsollwert gewählt. Der zweite Abgleichsollwert muss nur einmal ermittelt werden und dürfte — bei maschineller Fertigung der Blenden — zumindest für jedes Fertigungslos gleich bleiben.

## Patentansprüche

1. Vorrichtung zum automatischen Abgleich der Kennlinie einer Ablenkeinheit nach Nullpunkt und Steigung mit folgenden Merkmalen:
a) ein Sollwert für die Ablenkeinheit (A) ist einem ersten Eingang eines Multiplizierers (1) zugeführt, dessen zweiter Eingang mit dem Ausgang eines ersten Speichers (3) verbunden ist,
b) der Ausgang des Multiplizierers (1) ist mit einem ersten Eingang eines Addierers (2) verbunden, dessen zweiter Eingang mit dem Ausgang eines zweiten Speichers (4) verbunden ist,
c) eine ein Lagemesssignal abgebende Lagemesseinrichtung (13) für die Ablenkeinheit (A) ist mit einem ersten Eingang einer Vergleicherstufe (12) verbunden, an deren zweitem Eingang bei einem Nullabgleichbefehl der Wert Null als erster Abgleichsollwert und bei einem Steigungsabgleichbefehl ein zweiter Abgleichsollwert ansteht,

d) die Vergleicherstufe (12) gibt an einem ersten Ausgang (12a) ein Signal ab, wenn das Lagemesssignal am ersten Eingang (12c) grösser als der Wert am zweiten Eingang (12d) ist,

e) die Vergleicherstufe (12) gibt an einem zweiten Ausgang (12b) ein Signal ab, wenn das Lagemesssignal am ersten Eingang (12c) kleiner als der Wert am zweiten Eingang (12d) ist,

f) bei einem Nullabgleichbefehl wird als Sollwert für die Ablenkeinheit (A) der erste Abgleichsollwert 0 vorgegeben und der Inhalt des zweiten Speichers (4) bei Vorliegen eines Signals am ersten Ausgang (12a) der Vergleicherstufe (12) so lange inkrementiert bzw. bei Vorliegen eines Signals am zweiten Ausgang (12b) der Vergleicherstufe (12) so lange dekrementiert, bis an keinem der Ausgänge der Vergleicherstufe ein Signal ansteht, und

g) bei einem Steigungsabgleichbefehl wird als Sollwert für die Ablenkeinheit (A) der zweite Abgleichsollwert vorgegeben und der Inhalt des ersten Speichers (3) bei Vorliegen eines Signals am ersten Ausgang (12a) der Vergleicherstufe (12) so lange inkrementiert bzw. bei Vorliegen eines Signals am zweiten Ausgang (12b) der Vergleicherstufe (12) so lange dekrementiert, bis an keinem der Ausgänge der Vegleicherstufe (12) ein Signal ansteht.

2. Vorrichtung nach Anspruch 1, dadurch gekennzeichnet, dass der erste und der zweite Speicher (3, 4) vor Beginn des Abgleichs mit Werten geladen werden, die kleiner als die nach erfolgtem Abgleich zu erwartenden Werte sind, und dass lediglich ein Inkrementieren der Inhalte des ersten und zweiten Speichers (3, 4) erfolgt.

3. Vorrichtung nach einem der Ansprüche 1 oder 2, dadurch gekennzeichnet, dass die Abgleichsollwerte in einem dritten Speicher (5) abgespeichert sind, an dessen Adresseingängen der Nullabgleichbefehl und der Steigungsabgleichbefehl anstehen und dessen Ausgänge mit dem ersten Eingang des Multiplizierers (1) und mit dem zweiten Eingang (12d) des Vergleichers (12) verbunden sind.

4. Vorrichtung nach Anspruch 3, dadurch gekennzeichnet, dass zwischen dem dritten Speicher (5) und dem ersten Eingang des Multiplizierers (1) ein Umschalter (6) eingefügt ist, an dessen erstem Eingang der Sollwert ($L_{soll}$) für die Ablenkeinheit (A) ansteht, dessen zweiter Eingang mit dem Ausgang des dritten Speichers (5) verbunden ist und der bei einem Steigungsabgleichbefehl oder Nullabgleichbefehl vom ersten auf den zweiten Eingang umschaltet.

5. Vorrichtung nach einem der Ansprüche 1 bis 4, dadurch gekennzeichnet, dass der erste und der zweite Speicher (3, 4) ein erster und ein zweiter Zähler sind und dass ein Taktgeber (7) vorgesehen ist, der die Inkrementier- (IV) und Dekrementiereingänge (IR) des ersten und des zweiten Zählers (3, 4) mit Zählimpulsen beaufschlagt.

6. Vorrichtung nach Anspruch 5, dadurch gekennzeichnet, dass der Taktgeber (7) mit den jeweils ersten Eingängen von vier UND-Gattern (8 bis 11) verbunden ist, dass jeweils am zweiten Eingang des ersten und zweiten UND-Gatters (8, 9) der Nullabgleichbefehl und jeweils am zweiten Eingang des dritten und vierten UND-Gatters (10, 11) der Steigungsabgleichbefehl ansteht, dass der erste Ausgang (12a) der Vergleicherstufe (12) jeweils mit dem dritten Eingang des zweiten und vierten UND-Gatters (9, 11) und der zweite Ausgang (12b) der Vergleicherstufe (12) jeweils mit dem dritten Eingang des ersten und dritten UND-Gatters (8, 10) verbunden ist und dass der Ausgang des ersten UND-Gatters (8) mit dem Inkrementiereingang (IV) des zweiten Zählers (4), der Ausgang des zweiten UND-Gatters (9) mit dem Dekrementiereingang (IR) des zweiten Zählers (4), der Ausgang des dritten UND-Gatters (10) mit dem Inkrementiereingang (IV) des ersten Zählers (3) und der Ausgang des vierten UND-Gatters (11) mit dem Dekrementiereingang (IR) des ersten Zählers (3) verbunden sind.

7. Vorrichtung nach Anspruch 3, dadurch gekennzeichnet, dass der erste bis dritte Speicher (3 bis 5) Pufferspeicher sind, die vom Datenbus (16) eines Mikroprozessors oder Rechners (15) entsprechend geladen werden.

8. Vorrichtung nach Anspruch 7, dadurch gekennzeichnet, dass die Speicher (3 bis 5) als Digital/Analog-Wandler ausgeführt sind, wobei der dritte Speicher (5) und der Multiplizierer (1) zu einem multiplizierenden Digital/Analog-Wandler (5) zusammengefasst sind.

9. Vorrichtung nach einem der Ansprüche 1 bis 8, dadurch gekennzeichnet, dass die Lagemesseinrichtung (13) eine mit einer Welle der Ablenkeinheit (A) verbundene Scheibe (13d) enthält, die im Lichtweg zwischen einem Lichtsender (13a) und einem das Lagemesssignal abgebenden Lichtempfänger (13c) liegt, dass die Scheibe (13d) eine erste Schlitzblende (13e) aufweist, die bei Nullage der Ablenkeinheit (A) im Lichtweg liegt, und dass die Scheibe (13d) eine zweite Schlitzblende (13f) aufweist, die im Lichtweg liegt, wenn die Lage der Ablenkeinheit (A) mit dem zweiten Abgleichsollwert übereinstimmt.

10. Vorrichtung nach Anspruch 9, dadurch gekennzeichnet, dass der Lichtempfänger (13c) eine Differentialfotodiode ist.

**Claims**

1. An automatic deflection device for adjusting the deflection characteristic in accordance with a zero point and gradation, having the following features:

(*a*) feeding a theoretical value for the deflection device (A) to a first input of a multiplier (1), whose second input is connected to the output of a first store (3),

(*b*) connecting the output of the multiplier (1) to a first input of an adder (2), whose second input is connected to the output of a second store (4),

(*c*) connecting a position measuring device (13) for the deflection device (A), which transmits a position measuring signal, to a first input of a comparator stage (12), to whose second input the value zero is presented as a first adjustment theoretical value in the event of a zero adjustment command and as a second adjustment theoretical value in the event of a gradation adjustment command,

(d) the transmission of a signal from a first output (12a) of the comparator stage (12) if the position measuring signal at the first input (12c) is greater than the value at the second input (12d),

(e) the transmission of a signal from a second output (12b) of the comparator stage (12) if the position measuring signal at the first input (12c) is smaller than the value at the second input (12d),

(f) in the event of a zero adjustment command, giving the first adjustment theoretical value 0 as theoretical value for the deflection unit (A), and incrementing the content of the second store (4), when a signal is present at the first output (12a) of the comparator stage (12), or decreasing said content, when a signal is present at the second output (12b) of the comparator stage (12), as the case may be, until there is no signal at any of the outputs of the comparator stage, and

(g) giving the second adjustment theoretical value as a theoretical value for the deflection unit (A) in the case of a gradation adjustment command and incrementing the content of the first store (3), when a signal occurs at the first output (12a) of the comparator stage (12), or decreasing said content, when a signal occurs at the second output (12b) of the comparator stage (12), as the case may be, until there is no signal at any of the outputs of the comparator stage (12).

2. A device as claimed in Claim 1, characterised in that, before the beginning of the adjustment, the first and second stores (3, 4) are loaded with values smaller than the values which are to be expected after the effected adjustment, and that only an incrementing operation of the contents of the first and second stores (3, 4) is carried out.

3. A device as claimed in Claim 1 or 2, characterised in that the adjustment theoretical values are stored in a third store (5), at whose address inputs the zero adjustment command and the gradation adjustment command are present, and whose outputs are connected to the first input of the multiplier (1) and to the second input (12d) of the comparator (12).

4. A device as claimed in Claim 3, characterised in that there is inserted between the third store (5) and the first input of the multiplier (1) a change-over switch (6), at whose first input the theoretical value ($L_{soll}$) for the deflection unit (A) is present, whose second input is connected to the output of the third store (5) and which switches over from the first to the second input in the case of a gradation adjustment command or a zero adjustment command.

5. A device as claimed in one of Claims 1 to 4, characterised in that the first and the second store (3, 4) are a first and a second counter, and that there is provided a clock pulse generator (7) which supplies counting pulses to the incrementing (IV) and decrementing inputs (IR) of the first and second counters (3, 4).

6. A device as claimed in Claim 5, characterised in that the clock pulse generator (7) is connected to the first inputs of four AND-gates (8 to 11), that the zero adjustment command is present at the second input of the first and the second AND-gates (8, 9) respectively and the gradation adjustment command is present at the second input of the third and fourth AND-gates (10, 11) respectively, that the first output (12a) of the comparator stage (12) is respectively connected to the third input of the second and fourth AND-gates (9, 11) and the second output (12b) of the comparator stage (12) is respectively connected to the third input of the first and third AND-gates (8, 10), and that the output of the first AND-gate (8) is connected to the incrementing input (IV) of the second counter (4), the output of the second AND-gate (9) is connected to the decrease input (IR) of the second counter (4), the output of the third AND-gate (10) is connected to the incrementing input (IV) of the first counter (3) and the output of the fourth AND-gate (11) is connected to the decrease input (IR) of the first counter (3).

7. A device as claimed in Claim 3, characterised in that the first to third stores (3 to 5) are buffer stores which are accordingly loaded by the date bus (16) of a microprocessor or computer (15).

8. A device as claimed in Claim 7, characterised in that the stores (3 to 5) are designed as digital-to-analogue transducers, the third store (5) and the multiplier (1) being combined to form the multiplying digital-to-analogue transducer (5).

9. A device as claimed in one of Claims 1 to 8, characterised in that the position measuring device (13) comprises a disc (13d) connected to a shaft of the deflection device (A) and arranged in the light path between a light transmitter (13a) and a light receiver (13c) which transmits the position measuring signal, that the disc (13d) has a first slit diaphragm (13e) which lies in the light path at the zero position of the deflection unit (A), and that the disc (13d) has a second slit diaphragm (13f) which lies in the light path if the position of the deflection unit (A) corresponds to the second adjustment theoretical value.

10. A device as claimed in Claim 9, characterised in that the light receiver (13c) is a differential photo-diode.

**Revendications**

1. Appareil pour l'ajustement automatique de la caractéristique d'une unité de déflexion selon le point zéro et la pente de montée, avec les particularités suivantes:

a) une valeur nominale pour l'unité de déflexion (A) est amenée à une première entrée d'un multiplicateur (1) dont la seconde entrée est reliée à la sortie d'une première mémoire (3),

b) la sortie du multiplicateur (1) est reliée à une première entrée d'un additionneur (2) dont la seconde entrée est reliée à la sortie d'une deuxième mémoire (4),

c) un dispositif de mesure de position (13) délivrant un signal de mesure de position pour l'unité de déflexion (A) est relié à une première entrée d'un étage comparateur (12) à la deuxième entrée duquel se tient, pour un ordre d'ajustement nul, la valeur zéro comme première valeur nominale d'ajustement et, pour un ordre d'ajustement de pente ascendante, une seconde valeur nominale d'ajustement,

d) l'étage comparateur (12) fournit à une première sortie (12a) un signal quand le signal de mesure de position à la première entrée (12c) est supérieur à la valeur sur la seconde entrée (12d),

e) l'étage comparateur (12) fournit à une seconde sortie (12b) un signal quand le signal de mesure de position à la première entrée (12c) est inférieur à la valeur sur la seconde entrée (12d),

f) dans le cas d'un ordre d'ajustement nul, la première valeur nominale d'ajustement 0 est prédéterminée comme valeur nominale pour l'unité de déflexion (A), et le contenu de la deuxième mémoire (4), lors de la présentation d'un signal à la première sortie (12a) de l'étage comparateur (12), est aussi longtemps en accroissement ou, lors de la présentation d'un signal à la deuxième sortie (12b) de l'étage comparateur (12), est aussi longtemps en décroissance jusqu'à ce qu'il n'y ait plus de signal aux sorties de l'étage comparateur, et

g) dans le cas d'un ordre d'ajustement de pente ascendante, la seconde valeur nominale d'ajustement est prédéterminée comme valeur nominale pour l'unité de déflexion (A), et le contenu de la première mémoire (3), lors de la présentation d'un signal à la première sortie (12a) de l'étage comparateur (12), est aussi longtemps en accroissement ou, lors de la présentation d'un signal à la deuxième sortie (12b) de l'étage comparateur (12), est aussi longtemps en décroissance jusqu'à ce qu'il n'y ait plus de signal aux sorties de l'étage comparateur.

2. Appareil selon la revendication 1, caractérisé en ce que les première et deuxième mémoires (3, 4) sont chargées, avant le commencement de l'ajustement, avec des valeurs qui sont inférieures à celles attendues après ajustement réussi, et en ce que l'on obtient seulement un accroissement des contenus des première et deuxième mémoires (3, 4).

3. Appareil selon l'une des revendications 1 ou 2, caractérisé en ce que les valeurs nominales d'ajustement sont emmagasinées dans une troisième mémoire (5) aux entrées d'adresse de laquelle se tiennent l'ordre d'ajustement de zéro et l'ordre d'ajustement de pente ascendante, et dont les sorties sont reliées à la première entrée du multiplicateur (1) et à la deuxième entrée (12d) du comparateur (12).

4. Appareil selon la revendication 3, caractérisé en ce que, entre la troisième mémoire (5) et la première entrée du multiplicateur (1), est inséré un inverseur (6) à la première entrée duquel se tient la valeur nominale ($L_{soll}$) pour l'unité de diffusion (A), dont la deuxième entrée est reliée à la sortie de la troisième mémoire (5) et qui, lors d'un ordre d'ajustement de pente ascendante ou d'un ordre d'ajustement de zéro, commute de la première sur la deuxième entrée.

5. Appareil selon l'une des revendications 1 à 4, caractérisé en ce que les première et deuxième mémoires (3, 4) sont un premier et un second compteur, et en ce qu'est prévue une horloge (7) qui alimente les entrées d'accroissement (IV) et de décroissance (IR) des premier et second compteurs (3, 4) avec impulsions de comptage.

6. Appareil selon la revendication 5, caractérisé en ce que l'horloge (7) est reliée à chacune des premières entrées de quatre portes ET (8 à 11), en ce que l'ordre d'ajustement de zéro se tient à chaque deuxième entrée des première et deuxième portes ET (8, 9) et l'ordre d'ajustement de pente ascendante se tient à chaque deuxième entrée des troisième et quatrième portes ET (10, 11), en ce que la première sortie (12a) de l'étage comparateur (12) est reliée respectivement à la troisième entrée des deuxième et quatrième portes ET (9, 11), et la deuxième sortie (12b) de l'étage comparateur (12) est reliée respectivement à la troisième entrée des première et troisième portes ET (8, 10), et en ce que la sortie de la première porte ET (8) est reliée à l'entrée d'accroissement (IV) du deuxième compteur (4), la sortie de la deuxième porte ET (9) à l'entrée de décroissance (IR) du deuxième compteur (4), la sortie de la troisième porte ET (10) à l'entrée d'accroissement (IV) du premier compteur (3), et la sortie de la quatrième porte ET (11) à l'entrée de décroissance (IR) du premier capteur (3).

7. Appareil selon la revendication 3, caractérisé en ce que les première, deuxième et troisième mémoires (3 à 5) sont des mémoires-tampons chargées en conséquence par un bus de données (16) d'un microprocesseur ou calculateur (15).

8. Appareil selon la revendication 7, caractérisé en ce que les mémoires (3 à 5) sont réalisées comme convertisseurs numérique/analogique, la troisième mémoire (5) et le multiplicateur (1) étant rassemblés en un convertisseur numérique/analogique (5) multiplicateur.

9. Appareil selon l'une des revendications 1 à 8, caractérisé en ce que le dispositif de mesure de position (13) contient un disque (13d) relié à un arbre de l'unité de déflexion (A) qui se place sur le trajet lumineux entre une source de lumière (13a) et un récepteur de lumière (13c) délivrant le signal de mesure de position, en ce que le disque (13d) présente un premier diaphragme à fentes (13e) qui, en position zéro de l'unité de déflexion (A), se place sur le trajet lumineux, et en ce que le disque (13d) présente un second diaphragme à fentes (13f) qui se place sur le trajet lumineux quand la position de l'unité de déflexion (A) concorde avec la deuxième valeur nominale d'ajustement.

10. Appareil selon la revendication 9, caractérisé en ce que le récepteur de lumière (13c) est une photodiode différentielle.

FIG 1

FIG 3

FIG 2

FIG 4

FIG 5